# DEMANDE DE BREVET EUROPEEN

(11) **EP 4 660 058 A1**
(43) Date de publication de la demande: **10.12.2025**
(21) Numéro de dépôt: 25170911.9
(22) Date de dépôt: 16.04.2025
(51) Int. Cl.: B62D 25/02, B62D 25/08, B62D 25/20

(54) **ENSEMBLE DE SOUBASSEMENT COMPORTANT UNE VOIE D'EFFORT SOUS PLANCHER À DOUBLE FONCTION EN CAS DE COLLISION LATÉRALE ET VÉHICULE AUTOMOBILE COMPORTANT UN TEL ENSEMBLE**

(30) Priorité: 03.06.2024 FR 2405760
(71) Demandeur: Stellantis Auto SAS, 78300 Poissy (FR)
(72) Inventeur: TOR, THOU, 25150 PONT DE ROIDE VERMONDANS (FR); MAGAS, MIHAELA MARIA, 70110 AUTREY LES CERRE (FR); TROPEE, NICOLAS, 90000 BELFORT (FR); BORNIER, PAUL, 70400 LUZE (FR); BESSETTE, DAMIEN, 25150 ECOT (FR); MAURICE, SEBASTIEN, 25360 GONSANS (FR)
(74) Mandataire: BCIP

(57) **Abrégé**

Ensemble de soubassement comportant une voie d'effort sous plancher à double fonction en cas de collision latérale et véhicule automobile comportant un tel ensemble.

L'invention concerne un ensemble de soubassement (1) d'un véhicule automobile, comprenant :
- un plancher avant (5), comprenant une partie avant (7) et une partie centrale (9), lesdites parties avant et centrale étant reliées par soudure,
- un longeron latéral longitudinal (3), bordant une partie dudit plancher avant,
- un brancard arrière (15), en vis-à-vis dudit longeron latéral longitudinal,
- un ensemble de raidisseurs transversaux (25) reliant ledit longeron latéral longitudinal audit brancard arrière,
- une pièce de renfort longitudinale (17) s'étendant longitudinalement sur la partie avant (7) dudit plancher avant.

Selon l'invention, l'ensemble de soubassement (1) comprend une pièce de renfort transversale (27), s'étendant transversalement sur la partie avant (7) dudit plancher avant, reliant ledit brancard arrière (15) à ladite pièce de renfort longitudinale.

## Description

### [Domaine technique]

L'invention a trait au domaine des véhicules automobiles, en particulier au domaine de la sécurité passive du véhicule automobile pour assurer une protection en cas de choc latéral.

L'invention concerne plus particulièrement un ensemble de soubassement d'un véhicule automobile et un véhicule automobile comportant un tel ensemble de soubassement.

### [Etat de la technique antérieure]

Une structure de caisse de véhicule automobile comporte un ensemble d'éléments structurels de tôle conférant la raideur au véhicule automobile, assemblés les uns aux autres et formant l'ossature du véhicule automobile.

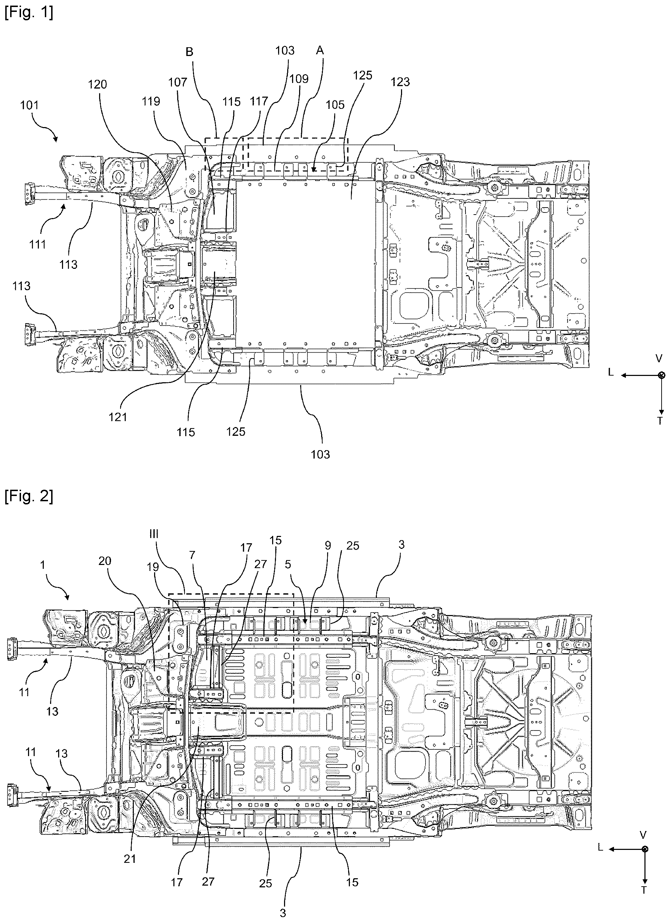

On se réfère à la figure 1 montrant un ensemble de soubassement 101 de l'art antérieur.

La structure de caisse comporte, notamment, parmi ces éléments de tôle, une structure latérale gauche et une structure latérale droite.

Chaque structure latérale comporte un ensemble d'éléments horizontaux supérieurs et inférieurs, s'étendant sensiblement longitudinalement relativement à la caisse, et un ensemble d'éléments verticaux, s'étendant sensiblement verticalement relativement à la caisse.

Les éléments horizontaux inférieurs comportent des longerons latéraux longitudinaux 103 définissant une partie du pourtour de l'ensemble de soubassement 101 de la caisse.

La structure de caisse comporte aussi, parmi ces éléments structurels, un plancher avant 105 comportant une partie avant 107 et une partie centrale 109 assemblées entre elles par soudure.

La structure de caisse comporte en outre, parmi ces éléments structurels, des poutres structurelles longitudinales 111 couramment appelées « brancards » et s'étendant longitudinalement relativement au véhicule. Les brancards 111 comportent typiquement deux brancards avant 113, s'étendant de part et d'autre d'un groupe motopropulseur (non représenté) du véhicule, et deux brancards arrière 115, s'étendant en arrière des brancards avant 113 et situés en vis-à-vis des longerons latéraux longitudinaux 103, vers l'intérieur du plancher avant 105 du véhicule et sous le plancher avant du véhicule.

La partie avant 107 du plancher avant 105 est renforcée longitudinalement par l'intermédiaire de pièces de renfort longitudinales 117 du plancher avant 105, agencées longitudinalement sur la partie avant 107 du plancher avant 105.

Une première pièce d'interface, appelée pièce d'interface extérieure 119, assure la liaison entre le longeron latéral longitudinal 103 et le brancard avant 113 correspondant. Une deuxième pièce d'interface, appelée pièce d'interface intérieure 120, assure la liaison entre la première pièce d'interface 119, un tunnel central 121 du véhicule et le tablier (non représenté) du véhicule.

La pièce de renfort longitudinale 117 est fixée à la pièce d'interface intérieure 120 et au tunnel central 121 et s'étend longitudinalement sur la partie avant 107 du plancher avant 105.

Lorsque le véhicule est un véhicule automobile électrique avec batterie (véhicule automobile dit « BEV », acronyme anglo-saxon de « Battery Electric Vehicle »), ou lorsque le véhicule est de type hybride comprenant un moteur thermique et un moteur électrique qui fonctionnent simultanément ou alternativement de manière à réduire la puissance consommée par le véhicule automobile, par exemple un véhicule de type hybride rechargeable (véhicule automobile dit « PHEV », acronyme anglais de « Plug-in Hybrid Electric Vehicle »), le véhicule comporte une batterie de traction 123 fixée sous le plancher avant 105 de l'ensemble de soubassement 101, alimentant le moteur électrique du véhicule.

Parmi la pluralité de tests utilisés pour l'homologation des véhicules automobiles, un choc dit « poteau », encore appelé « choc latéral » est pratiqué, notamment afin de révéler des critères de performance relatifs à la protection des occupants.

Ce test consiste à projeter le véhicule automobile à une vitesse de 32 km/h environ latéralement contre un poteau rigide, de sorte que le véhicule définisse un angle de 75° environ relativement au poteau.

Lors d'un choc latéral, le poteau vient s'encastrer dans le véhicule automobile au niveau de la porte avant côté conducteur ou côté passager.

Lorsque le véhicule automobile est soumis à un tel choc latéral, la batterie de traction 123 doit être protégée afin d'éviter son endommagement et limiter les risques d'incendie.

A cet effet, l'ensemble de soubassement 101 comporte des raidisseurs transversaux 125 de plancher avant 105, s'étendant transversalement relativement au véhicule et reliant les longerons latéraux longitudinaux 103 aux brancards arrière 115 correspondants.

Ainsi, en cas de choc poteau au niveau de la zone A du véhicule, les raidisseurs transversaux 125 de plancher avant 105 transmettent les efforts du longeron latéral longitudinal 103 au brancard arrière 115 correspondant, permettant d'assurer la protection des occupants et limiter les risques d'endommagement de la batterie de traction 123.

Toutefois, en cas de choc poteau au niveau de la zone B du véhicule, c'est-à-dire au niveau d'une partie avant du plancher avant 105 en arrière du tablier du véhicule et à proximité immédiate du tablier, les efforts transitent du longeron latéral longitudinal 103 au brancard arrière 115 correspondant via les raidisseurs transversaux 125.

Les efforts transitent ensuite transversalement depuis le brancard arrière 115 dans la partie avant 107 du plancher avant 105.

De tels efforts repris par la partie avant 107 du plancher avant 105 peuvent entraîner une rupture des points de soudure entre la partie avant 107 et la partie centrale 109 du plancher avant 105, pouvant conduire à une désolidarisation entre la partie avant 107 et la partie centrale 109 du plancher avant 105.

Une telle désolidarisation entraîne un risque élevé d'intrusion dans le véhicule, pouvant blesser les occupants.

Cela entraîne aussi un risque élevé de contact avec la batterie de traction 123, augmentant ainsi considérablement le risque d'incendie du véhicule.

### [Exposé de l'invention]

La présente invention vise à surmonter les inconvénients précités, et concerne pour ce faire un ensemble de soubassement d'un véhicule automobile, comprenant :
- un plancher avant, comprenant une partie avant et, en arrière de ladite partie avant, une partie centrale, lesdites parties avant et centrale étant reliées entre elles par soudure,
- un longeron latéral longitudinal, bordant latéralement au moins une partie dudit plancher avant,
- un brancard arrière, s'étendant longitudinalement en vis-à-vis dudit longeron latéral longitudinal,

- un ensemble de raidisseurs transversaux de plancher avant, s'étendant transversalement de façon à relier ledit longeron latéral longitudinal audit brancard arrière,
- une pièce de renfort longitudinale dudit plancher avant, s'étendant longitudinalement sur la partie avant dudit plancher avant,
ledit ensemble étant remarquable en ce qu'il comprend une pièce de renfort transversale, s'étendant transversalement sur la partie avant dudit plancher avant, reliant ledit brancard arrière à ladite pièce de renfort longitudinale dudit plancher avant.

Ainsi, en cas de choc poteau au niveau d'une zone avant du plancher avant, en arrière du tablier du véhicule et à proximité immédiate du tablier, les efforts transitent dans un premier temps du longeron latéral longitudinal au brancard arrière, via les raidisseurs transversaux.

En prévoyant d'équiper l'ensemble de soubassement d'une pièce de renfort transversale du plancher avant, s'étendant transversalement sur la partie avant du plancher avant et reliant le brancard arrière à la pièce de renfort longitudinale du plancher avant, on définit une voie d'efforts permettant de transmettre les efforts entre le brancard arrière et la pièce de renfort longitudinale du plancher avant.

Ainsi, les efforts transitent dans un second temps depuis le brancard arrière jusqu'à la pièce de renfort longitudinale du plancher avant, via la pièce de renfort transversale.

La résistance en compression de la pièce de renfort transversale permet de diminuer l'intrusion du poteau.

De la sorte, on limite le risque de rupture des points de soudure entre la partie avant du plancher avant et la partie centrale du plancher avant, et donc de désolidarisation entre la partie avant et la partie centrale du plancher avant. On soulage ainsi la zone d'assemblage entre la partie avant et la partie centrale du plancher avant.

Ainsi, grâce à la présente invention, la protection des occupants présents à bord du véhicule est augmentée.

Aussi, on réduit le risque de contact avec la batterie de traction, limitant ainsi le risque d'incendie du véhicule.

Selon des caractéristiques optionnelles de l'ensemble de soubassement selon l'invention :
- l'ensemble de soubassement comporte une zone de soudure comportant au moins deux points de soudure assurant chacune la liaison entre ladite pièce de renfort transversale, la partie avant dudit plancher avant et la partie centrale dudit plancher avant ;
- ladite pièce de renfort transversale est fixée par soudure à ladite partie avant dudit plancher avant ;
- ladite pièce de renfort transversale est fixée par soudure audit brancard arrière et à ladite pièce de renfort longitudinale dudit plancher avant ;
- ladite pièce de renfort transversale comporte une paroi verticale avant et une paroi verticale arrière reliée à ladite paroi verticale avant par une paroi horizontale, lesdites parois verticales avant et arrière et ladite paroi horizontale définissant une section transversale en forme de U ;
- l'ensemble de soubassement comporte une batterie de traction fixée sous ledit plancher avant et adaptée pour alimenter un moteur électrique dudit véhicule automobile, et la distance entre ladite paroi verticale arrière de ladite pièce de renfort transversale et ladite batterie de traction est comprise entre environ 40mm et environ 60mm ;
- la hauteur maximale comprise entre la partie avant dudit plancher avant et ladite paroi horizontale de ladite pièce de renfort transversale est comprise entre environ 25mm et environ 40mm ;
- ladite paroi verticale avant de ladite pièce de renfort transversale est prolongée par une patte de fixation avant s'étendant vers l'avant dudit ensemble de soubassement et ladite paroi verticale arrière de ladite pièce de renfort transversale est prolongée par une patte de fixation arrière s'étendant vers l'arrière dudit ensemble de soubassement ;
- ladite zone de soudure, comportant au moins deux points de soudure assurant la liaison entre ladite pièce de renfort transversale, la partie avant dudit plancher avant et la partie centrale dudit plancher avant, comporte ladite patte de fixation arrière de ladite pièce de renfort transversale.

L'invention concerne aussi un véhicule automobile comportant un ensemble de soubassement, remarquable en ce que ledit ensemble de soubassement est selon l'invention.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] montre un ensemble de soubassement d'un véhicule automobile de l'art antérieur, vu de dessous.
[Fig. 2] est une vue de dessous d'un ensemble de soubassement d'un véhicule automobile selon l'invention.
[Fig. 3] est un agrandissement de la zone III de la figure 2.
[Fig. 4] est un agrandissement de la zone IV de la figure 3.
[Fig. 5] est une vue en coupe transversale selon la ligne V-V de la figure 4.
[Fig. 6] montre de façon schématique le cheminement des efforts lorsque le véhicule est soumis à un choc poteau latéral.
[Fig. 7] montre l'ensemble de soubassement de l'invention postérieurement au choc poteau latéral.

### [Description des modes de réalisation]

Dans la suite de la description, des éléments présentant une structure identique ou des fonctions analogues sont désignés par une même référence.

On adoptera par convention, à titre non limitatif, des orientations longitudinale, verticale et transversale indiquées par le trièdre direct (L, V, T) désignant les axes longitudinal, vertical et transversal du véhicule.

Dans ce qui suit, les termes « gauche », « droit », « inférieur » et « supérieur » s'entendent par rapport au véhicule.

De même, les termes « avant » et « arrière » s'entendent par rapport à l'orientation générale du véhicule tel que pris selon son sens normal de marche.

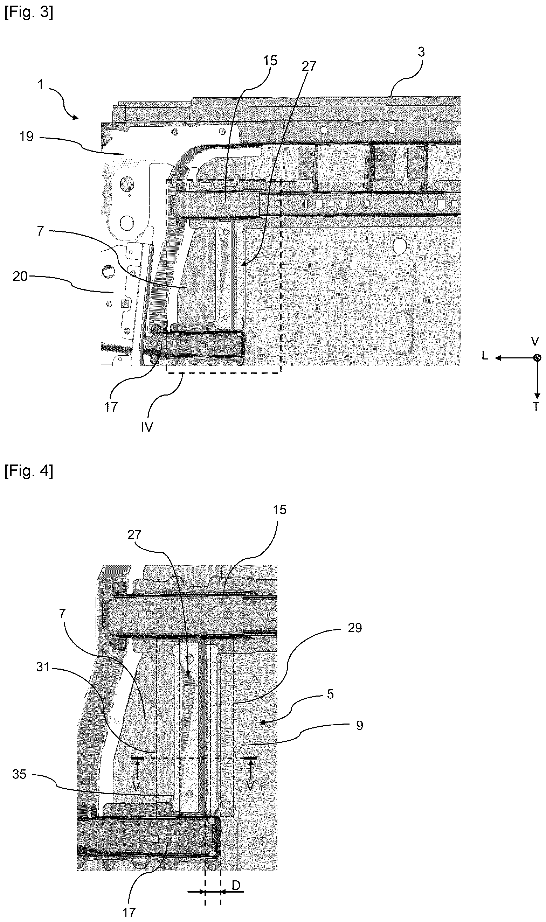

On se réfère à la figure 2 montrant un ensemble 1 de soubassement d'un véhicule automobile selon l'invention, vu de dessous, et à la figure 3 montrant un agrandissement de la zone III de la figure 2.

L'ensemble de soubassement 1 comporte des longerons latéraux longitudinaux 3, définissant une partie du pourtour de l'ensemble de soubassement 1 de la caisse.

L'ensemble de soubassement 1 comporte un plancher 5 avant, définissant une pièce de la plateforme de l'habitacle du véhicule automobile. Le plancher avant 5 comporte une partie avant 7 et une partie centrale 9 en arrière de la partie avant 7, assemblées entre elles par soudure.

L'ensemble de soubassement 1 comporte en outre des brancards 11, s'étendant longitudinalement relativement au véhicule.

Les brancards 11 comportent typiquement deux brancards avant 13, s'étendant de part et d'autre d'un groupe motopropulseur (non représenté) du véhicule, et deux brancards arrière 15, s'étendant en arrière des brancards avant 13 et situés en vis-à-vis des longerons latéraux longitudinaux 3, vers l'intérieur du plancher avant 5 du véhicule et sous le plancher avant 5 du véhicule.

La partie avant 7 du plancher avant 5 est renforcée longitudinalement par l'intermédiaire de pièces de renfort longitudinales 17 du plancher avant 5, agencées longitudinalement sur la partie avant 7 du plancher avant 5.

Une première pièce d'interface, appelé pièce d'interface extérieure 19, assure la liaison entre le longeron latéral longitudinal 3 et le brancard avant 13 correspondant. Une deuxième pièce d'interface, appelée pièce d'interface intérieure 20, assure la liaison entre la première pièce d'interface 19, un tunnel central 21 du véhicule et le tablier (non représenté) du véhicule.

La pièce de renfort longitudinale 17 est fixée à la pièce d'interface intérieure 20 et au tunnel central 21 et s'étend longitudinalement sur la partie avant 7 du plancher avant 5.

L'ensemble de soubassement 1 comporte en outre un ensemble de raidisseurs transversaux 25 de plancher avant 5, s'étendant transversalement relativement au véhicule et reliant les longerons latéraux longitudinaux 3 aux brancards arrière 15 correspondants.

Selon l'invention, l'ensemble de soubassement 1 comporte des pièces de renfort transversales 27, s'étendant transversalement sur la partie avant 7 du plancher avant 5, reliant chaque brancard arrière 15 à la pièce de renfort longitudinale 17 du plancher avant 5 correspondante.

La raideur de la pièce de renfort transversale 27 est adaptée pour permettre le passage des efforts entre le brancard arrière 15 et la pièce de renfort longitudinale 17 du plancher avant 5 correspondante en conservant l'intégrité de la pièce de renfort transversale 27.

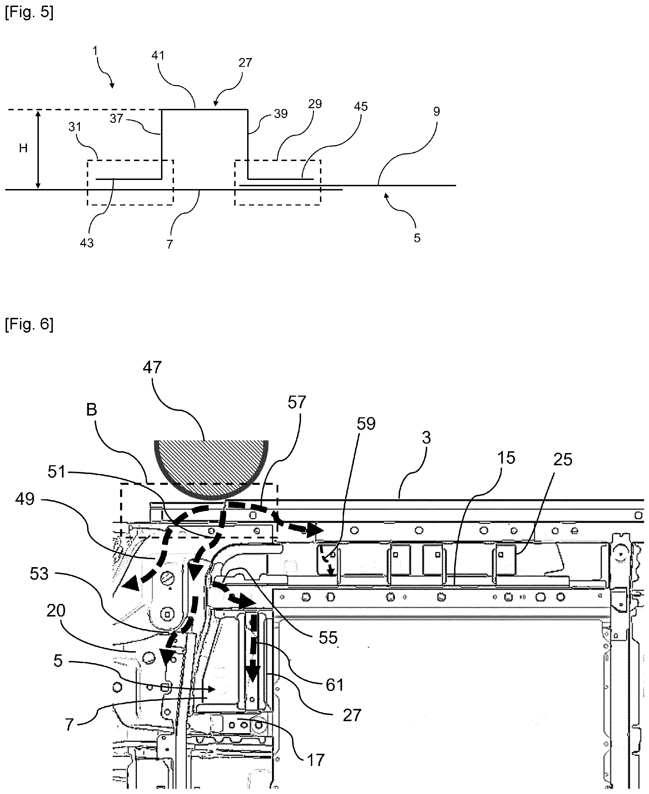

On se réfère à la figure 4 qui est un agrandissement de la zone IV de la figure 3, ainsi qu'à la figure 5 montrant schématiquement l'ensemble formé par les parties avant 7 et centrale 9 du plancher avant 5 et par la pièce de renfort transversale 27, vu en coupe transversale selon la ligne V-V de la figure 4.

Dans une réalisation, l'ensemble de soubassement 1 comporte une zone de soudure 29 comportant des points de soudure dont chacun des points de soudure assure une liaison triple entre la pièce de renfort transversale 27, la partie avant 7 du plancher avant 5 et la partie centrale 9 du plancher avant 5.

Deux points de soudure ou plus peuvent être prévus dans la zone de soudure 29.

De la sorte, on renforce encore davantage l'ensemble de soubassement 1 au niveau de la zone d'assemblage entre la partie avant 7 du plancher avant 5 et la partie centrale 9 du plancher avant 5, ce qui permet encore de limiter le risque de désolidarisation entre la partie avant 7 et la partie centrale 9 du plancher avant 5.

La zone de soudure 29 est agencée en partie arrière de la pièce de renfort transversale 27.

Au niveau de sa partie avant, la pièce de renfort transversale 27 est par ailleurs fixée par soudure à la partie avant 7 du plancher avant 5, au niveau d'une zone de soudure 31.

La pièce de renfort transversale 27 est en outre fixée, au niveau de ses extrémités latérales 33, 35, respectivement au brancard arrière 15 et à la pièce de renfort longitudinale 17.

La pièce de renfort transversale 27 comporte une paroi verticale avant 37 et une paroi verticale arrière 39, s'étendant sensiblement verticalement relativement au véhicule, reliées entre elles par une paroi horizontale 41, s'étendant sensiblement horizontalement relativement au véhicule.

La paroi verticale avant 37, la paroi horizontale 41 et la paroi verticale arrière 39 définissent une section transversale en forme de U.

Lorsque la pièce de renfort transversale 27 est montée sur le plancher avant 5, l'ensemble ainsi formé par les parties avant 7 et centrale 9 du plancher avant 5 et par la pièce de renfort transversale 27 définit un corps creux.

La paroi verticale avant 37 de la pièce de renfort transversale 27 est prolongée à l'avant par une patte de fixation avant 43 s'étendant vers l'avant de l'ensemble de soubassement 1.

La patte de fixation avant 43 est soudée à la partie avant 7 du plancher avant 5, au niveau de la zone de soudure 31.

La paroi verticale avant 37 de la pièce de renfort transversale 27 est prolongée à l'arrière par une patte de fixation arrière 45 s'étendant vers l'arrière de l'ensemble de soubassement 1.

Au niveau de la zone de soudure 31, la patte de fixation arrière 45 est soudée à la partie avant 7 et à la partie arrière 9 du plancher avant 5.

La partie arrière 9 du plancher avant 5 est alors prise en sandwich entre la patte de fixation arrière 45 de la pièce de renfort transversale 27 et la partie avant 7 du plancher avant 5.

Dans un exemple de réalisation, la hauteur maximale H, comprise entre la partie avant 7 du plancher avant 5 et la paroi horizontale 41 de la pièce de renfort transversale 27, est comprise entre environ 25mm et environ 40mm.

Le véhicule peut être électrique avec batterie (véhicule automobile dit « BEV », acronyme anglo-saxon de « Battery Electric Vehicle »), ou de type hybride comprenant un moteur thermique et un moteur électrique qui fonctionnent simultanément ou alternativement de manière à réduire la puissance consommée par le véhicule automobile, par exemple un véhicule de type hybride rechargeable (véhicule automobile dit « PHEV », acronyme anglais de « Plug-in Hybrid Electric Vehicle »).

Le véhicule comporte une batterie de traction (non représentée) fixée sous le plancher avant 5 de l'ensemble de soubassement 1, alimentant le moteur électrique du véhicule.

Dans un exemple de réalisation, la distance D entre la paroi verticale arrière 39 de la pièce de renfort transversale 27 et la batterie de traction (dont l'emplacement du bord latéral avant de la batterie de traction est illustré en pointillés à la figure 4) est comprise entre environ 40mm et environ 60mm.

Ainsi, lors d'un choc poteau subi par le véhicule, la distance D est telle que l'on évite avantageusement le contact entre la batterie de traction et la pièce de renfort transversale 27. De la sorte, on limite davantage le risque d'incendie de la batterie de traction.

On se réfère à la figure 6 montrant de façon schématique le cheminement des efforts lorsque le véhicule est soumis à un choc poteau latéral.

Lorsqu'un poteau 47 impacte latéralement le véhicule au niveau de la zone B du véhicule, c'est-à-dire au niveau de la partie avant 7 du plancher avant 5, en arrière du tablier et à proximité immédiate du tablier, une partie des efforts transite du longeron latéral longitudinal 3 dans la pièce d'interface extérieure 19 et dans la pièce d'interface intérieure 20, comme représenté par les flèches 49, 51, 53. Une partie des efforts arrive dans le brancard arrière 15, comme représenté par la flèche 55.

De la même manière, lors de l'impact du poteau 47 contre le véhicule, une autre partie des efforts est transmise par le longeron latéral longitudinal 3 au brancard arrière 15, via les raidisseurs transversaux 25, comme représenté par les flèches 57, 59.

Le brancard arrière 15 transmet les efforts à la pièce de renfort longitudinale 17 du plancher avant 5, via la pièce de renfort transversale 27, comme représenté par la flèche 61.

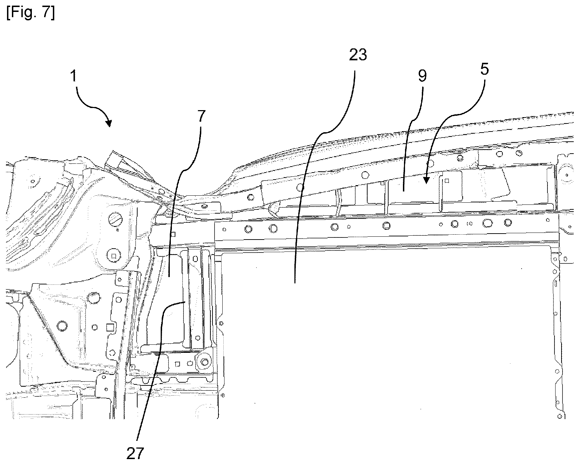

On se réfère à la figure 7 montrant l'ensemble de soubassement 1 postérieurement au choc poteau latéral illustré à la figure 6.

Comme représenté, la présence de la pièce de renfort transversale 27 a permis de diminuer l'intrusion du poteau dans le véhicule, ce qui permet de limiter le risque de rupture des points de soudure entre la partie avant 7 du plancher avant 5 et la partie centrale 9 du plancher avant 5, et donc de désolidarisation entre la partie avant 7 et la partie centrale 9 du plancher avant 5.

Ainsi, la protection des occupants présents à bord du véhicule est augmentée et le risque de contact avec la batterie de traction 23 est limité, réduisant ainsi le risque d'incendie du véhicule.

Comme il va de soi, la présente invention ne se limite pas aux seules formes de réalisation de cet ensemble de soubassement de véhicule automobile et de ce véhicule automobile comportant un tel ensemble de soubassement, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Ensemble de soubassement (1) d'un véhicule automobile, comprenant :
- un plancher avant (5), comprenant une partie avant (7) et, en arrière de ladite partie avant (7), une partie centrale (9), lesdites parties avant (7) et centrale (9) étant reliées entre elles par soudure,
- un longeron latéral longitudinal (3), bordant latéralement au moins une partie dudit plancher avant (5),
- un brancard arrière (15), s'étendant longitudinalement en vis-à-vis dudit longeron latéral longitudinal (3),
- un ensemble de raidisseurs transversaux (25) de plancher avant, s'étendant transversalement de façon à relier ledit longeron latéral longitudinal (3) audit brancard arrière (15),
- une pièce de renfort longitudinale (17) dudit plancher avant (5), s'étendant longitudinalement sur la partie avant (7) dudit plancher avant (5),
ledit ensemble de soubassement (1) étant **caractérisé en ce qu'**il comprend une pièce de renfort transversale (27), s'étendant transversalement sur la partie avant (7) dudit plancher avant (5), reliant ledit brancard arrière (15) à ladite pièce de renfort longitudinale (17) dudit plancher avant (5).

2. Ensemble de soubassement (1) selon la revendication 1, **caractérisé en ce qu'**il comporte une zone de soudure (31) comportant au moins deux points de soudure assurant chacun la liaison entre :
- ladite pièce de renfort transversale (27),
- la partie avant (7) dudit plancher avant (5),
- la partie centrale (9) dudit plancher avant (5).

3. Ensemble de soubassement (1) selon l'une des revendications 1 ou 2, **caractérisé en ce que** ladite pièce de renfort transversale (27) est fixée par soudure à ladite partie avant (7) dudit plancher avant (5).

4. Ensemble de soubassement (1) selon l'une quelconque des revendications 1 à 3, **caractérisé en ce que** ladite pièce de renfort transversale (27) est fixée par soudure audit brancard arrière (15) et à ladite pièce de renfort longitudinale (17) dudit plancher avant (5).

5. Ensemble de soubassement (1) selon l'une quelconque des revendications 1 à 4, **caractérisé en ce que** ladite pièce de renfort transversale (27) comporte une paroi verticale avant (37) et une paroi verticale arrière (39) reliée à ladite paroi verticale avant (37) par une paroi horizontale (41), lesdites parois verticales avant (37) et arrière (39) et ladite paroi horizontale (41) définissant une section transversale en forme de U.

6. Ensemble de soubassement (1) selon la revendication 5, comportant une batterie de traction (23) fixée sous ledit plancher avant (5) et adaptée pour alimenter un moteur électrique dudit véhicule automobile, **caractérisé en ce que** la distance (D) entre ladite paroi verticale arrière (39) de ladite pièce de renfort transversale (27) et ladite batterie de traction (23) est comprise entre environ 40mm et environ 60mm.

7. Ensemble de soubassement (1) selon l'une des revendications 5 ou 6, **caractérisé en ce que** la hauteur maximale (H) comprise entre la partie avant (7) dudit plancher avant (5) et ladite paroi horizontale (41) de ladite pièce de renfort transversale (27) est comprise entre environ 25mm et environ 40mm.

8. Ensemble de soubassement (1) selon l'une quelconque des revendications 5 à 7, **caractérisé en ce que** ladite paroi verticale avant (37) de ladite pièce de renfort transversale (27) est prolongée par une patte de fixation avant (43) s'étendant vers l'avant dudit ensemble de soubassement (1) et **en ce que** ladite paroi verticale arrière (39) de ladite pièce de renfort transversale (27) est prolongée par une patte de fixation arrière (45) s'étendant vers l'arrière dudit ensemble de soubassement (1).

9. Ensemble de soubassement (1) selon les revendications 2 et 8, **caractérisé en ce que** ladite zone de soudure (31), comportant au moins deux points de soudure assurant la liaison entre ladite pièce de renfort transversale (27), la partie avant (7) dudit plancher avant (5) et la partie centrale (9) dudit plancher avant (5), comporte ladite patte de fixation arrière (45) de ladite pièce de renfort transversale (27).

10. Véhicule automobile comprenant un ensemble de soubassement (1), **caractérisé en ce que** ledit ensemble de soubassement (1) est selon l'une quelconque des revendications 1 à 9.
